# EUROPEAN PATENT SPECIFICATION

(11) **EP 3 293 233 B1**
(45) Date of publication and mention of the grant of the patent: **10.04.2019**
(21) Application number: 16188512.4
(22) Date of filing: 13.09.2016
(51) Int. Cl.: C09D 7/00, C09D 5/00

(54) **AQUEOUS PROTECTIVE COATING COMPOSITION FOR CHROMIUM SURFACES**
WÄSSRIGE SCHUTZBESCHICHTUNGSZUSAMMENSETZUNG FÜR CHROMOBERFLÄCHEN
COMPOSITION DE REVÊTEMENT DE PROTECTION AQUEUSE POUR SURFACES DE CHROME

(43) Date of publication of application: 14.03.2018
(73) Proprietor: 3M Innovative Properties Company, Saint Paul, MN 55133-3427 (US)
(72) Inventor: Schuell, Christoph, 41453 Neuss (DE); Jing, Naiyong, St. Paul, MN 55133-3427 (US)
(74) Representative: Gabriel, Kiroubagaranne

(56) References cited:
- WO-A1-97/18269
- WO-A1-03/095110
- US-A1- 2007 092 741
- US-A1- 2010 015 339
- US-B1- 6 749 946

## Description

### Technical Field

The present disclosure relates generally to the field of protective coatings for metallic surfaces, more specifically to the field of protective coating compositions for chromium surfaces. The present disclosure also relates to a method of treating a chromium surface.

### Background

Metallic materials such as iron, steel, aluminum and zinc are widely used in the fields of transportation, aeronautics and astronautics, energy, electronics, architecture, upholstery, household electrical appliances, etc. In particular, stainless steel is ubiquitous in commercial kitchens, home kitchens, office buildings, airports, and various other public spaces. Most metals are susceptible to corrosion when exposed to humid air and corrosive liquids. Such corrosion may severely affect the quality of the metals and the products made of the metals. Accordingly, various methods for the passivation of metal surfaces to provide corrosion protection properties to such materials have been developed. Exemplary methods for providing corrosion protection to metallic surfaces are described e.g. in US 2005/0163933A1 (Dietsche et al.), US 2007/0240792A1 (Witteler et al.) and in US 2012/0053104A1 (Olson et al.). The disclosed methods make use of coating compositions comprising a water-soluble polymer, such as e.g. a polyacrylate.

Metallic surfaces are also often subjected to unwanted contamination, in particular oily contaminants. Coating compositions and methods claimed to provide easy cleaning of fingerprints from metallic (almost exclusively stainless steel or aluminum), siliceous or polymeric surfaces are described e.g. in US 2012/0273000A1 (Jing et al.), US 2016/0222223A1 (Jing et al.), US 2014/0060583A1 (Riddle et al.) and in WO 2016/044082A1 (Riddle et al.). The coating compositions and methods for removing oily contaminants disclosed in the art are often multi-component and multi-functional compositions, which necessarily adds processing complexity and/or increases the overall production costs.

Protective coating compositions for alternative metallic surfaces such as those comprising essentially chromium are not widely described in the art. Chromium-containing metallic surfaces are encountered though in a large variety of articles including those present in home or commercial kitchens, in decorative household appliances, in restrooms, in bathrooms, in automotive vehicles, or in consumer electronics.

Chromium surfaces are particularly sensitive to oily contaminants such as fingerprints, stains or marks originating from oily of fat components. Fingerprints or other oily contamination present on chrome surfaces not only detrimentally affect their aesthetic appearance, but may also attract additional dirt such as lint or dust. The ability to remove or clean oily contamination from chromium-containing surfaces is particularly challenging mainly owing to their particular surface anchoring chemistry. Also, when used in decorative items, the maintaining of the optics and/or haptics of the protective surface treated surface is particularly challenging for chromium surfaces, in particular rough chromium surfaces.

Without contesting the technical advantages associated with the protective coating compositions known in the art for alternative metallic surfaces, there is still a need for a protective coating composition providing excellent easy-to-clean properties towards oily contamination present on chromium surfaces. Other advantages of the coating compositions and methods of the disclosure will be apparent from the following description.

### Summary

The present invention is defined in claims 1-14 as attached. According to one aspect, the present disclosure relates to a protective coating composition for reducing oily contamination from a chromium surface, wherein the composition comprises:
a) a first hydrophilic functional silane;
b) optionally, a second hydrophilic functional silane distinct from the first hydrophilic functional silane;
c) optionally, a multivalent metal salt;
d) optionally a metal silicate; and
e) a solvent comprising water.

In another aspect, the present disclosure is directed to a method of reducing oily contamination from a chromium surface, which comprises the steps of:
a) providing a chromium surface;
b) applying a protective coating composition as described above to the chromium surface thereby forming a layer of the coating composition adjacent to the chromium surface; and
c) drying and/or curing the layer of the coating composition thereby forming a coating layer adjacent to the chromium surface.

According to still another aspect, the present disclosure is directed to a coated article comprising a chromium surface and a coating layer adjacent to the chromium surface, wherein the coating layer comprises a layer of the coating composition as described above which has been dried and/or cured onto the chromium surface.

According to yet another aspect, the present disclosure relates to the use of a coating composition as described above for reducing oily contamination from a chromium surface.

### Detailed description

According to a first aspect, the present disclosure relates to a protective coating composition for reducing oily contamination from a chromium surface, wherein the composition comprises:
a) a first hydrophilic functional silane;
b) optionally, a second hydrophilic functional silane distinct from the first hydrophilic functional silane;
c) optionally, a multivalent metal salt;
d) optionally a metal silicate; and
e) a solvent comprising water.

In the context of the present disclosure, it has been surprisingly found that a coating composition as described above provides excellent easy-to-clean properties towards oily contamination, in particular fingerprints, present on chromium surfaces.

Without wishing to be bound by theory, it is believed that this excellent easy-to-clean property is due to the hydrophilic functional silane which, when present on the treated surface, is believed to provide advantageous surface anchoring with the chromium surface and provide the treated chromium surface with hydrophilic properties particularly beneficial for the removal of an oily contamination, in particular with water. Surprisingly, still, it has been discovered that the presence of a hydrophilic functional silane alone is capable of providing the resulting coating composition with excellent easy-to-clean properties towards oily contamination and excellent durability characteristics - in particular against wet mechanical abrasion - without having to use additional adhesion or durability promoters.

In the context of the present disclosure, the expression "hydrophilic functional silane" is meant to designate a water-soluble, non-polymeric compound comprising functional groups, and which are able to render the surface treated with such functional silane "hydrophilic"; wherein a "hydrophilic" surface is meant to designate a surface that has the ability to be wet by aqueous solutions. Surfaces on which drops of water or aqueous solutions exhibit an advancing water contact angle of less than 45° will herewith be referred to as "hydrophilic" as per ASTM D7334-08. In contrast, "hydrophobic" surfaces are herewith meant to designate surfaces have an advancing water contact angle of 90° or greater as per ASTM D7334-08. Hydrophilic functional silanes for use herein include individual molecules and oligomers.

In the context of the present disclosure still, the expression "chromium surface" is meant to designate a metallic surface having a chromium content of at least 50wt%, based on the weight of the metallic surface.

The coating composition of the present disclosure is outstandingly suitable for reducing oily contamination from a chromium surface. As such, the protective coating compositions of the present disclosure are particularly suited for imparting "easy-to-clean" or "easy removal" properties to a chromium surface, in particular cleaning or removal with water or aqueous cleaning compositions. The coating compositions of the present disclosure may find utility as protective coating for chromium-containing metallic surfaces encountered in a large variety of articles including those present in home or commercial kitchens (e.g., refrigerator, dishwasher, stove, oven, microwave, exhaust hoods, fryers, grease traps, food-preparation tables, cabinets, toasters), in decorative household appliances and lighting, in restrooms (e.g., toilet roll dispensers, toilet stall partitions, urinal partitions), in bathrooms, in automotive vehicles (exterior or interior car or motorcycle parts, such as e.g. alloy wheels, body parts, decorative or functional metallic panels, tanks, handlebars, wheel guards, mirror caps), or in consumer electronics (metal cases for mobile phones, tablets, and computers).

The coating compositions of the present disclosure provide excellent easy-to-clean properties with regard to oily contamination on a treated chromium surface not only to fresh oily contamination (immediate removal) but also to dried oily contamination (later removal). Additionally, the coating compositions of the present disclosure provide outstanding easy-to-clean properties with regard to oily contamination on a treated chromium surface even upon prolonged exposure to wet environments.

Advantageously, the coating compositions of the present disclosure are able to provide excellent easy-to-clean properties with regard to oily contamination on chromium surfaces having various roughness characteristics, in particular on chromium surfaces having a roughness Ra comprised between 0.2 µm and 1.5 µm, in particular between 0.5 µm and 0.9 µm, when determined by confocal laser microscopy according to ISO 25178-6. Advantageously still, the coating compositions of the present disclosure are able to maintain the optics and/or haptics of the treated chromium surface on chromium surfaces having various roughness characteristics. According to yet another advantageous aspect, the protective coating compositions of the present disclosure are provided with excellent durability on chromium surfaces.

The coating composition of the present disclosure comprises, as a first technical feature, a hydrophilic functional silane. Hydrophilic functional silanes for use herein are not particularly limited. Any hydrophilic functional silane commonly known in the art may be used in the context of the present disclosure. Suitable hydrophilic functional silane for use herein will be easily identified by those skilled in the art, in the light of the present description. Exemplary hydrophilic functional silane for use herein may be found among those described e.g. in US 2012/0273000A1 (Jing et al.), US 2016/0222223A1 (Jing et al.), US 2014/0060583A1 (Riddle et al.) or in WO 2016/044082A1 (Riddle et al.), the full content of which is herewith incorporated by reference.

In a particular aspect of the present disclosure, the first hydrophilic functional silane, and optionally the second hydrophilic functional silane, is selected from the group consisting of zwitterionic silanes, non-zwitterionic silanes, and any combinations thereof.

In another particular aspect of the present disclosure, the zwitterionic silanes and the non-zwitterionic silanes comprise functional groups selected from the group consisting of carboxylate groups, sulfonate groups, quarternary ammonium groups, phosphonate groups, phosphate groups, hydroxyl groups, amine groups, amide groups, and any combinations thereof.

According to a preferred aspect of the coating composition of the present disclosure, the non-zwitterionic silanes for use herein are selected from cationic, anionic and nonionic silanes.

According to still a preferred aspect of the coating composition of the present disclosure, the non-zwitterionic silanes for use herein comprise functional groups selected from the group consisting of carboxylate groups, sulfonate groups, phosphonate groups, hydroxyl groups, amine groups, and any combinations thereof.

In a more preferred aspect of the present disclosure, the non-zwitterionic silanes for use herein have the following formula:

[(MO)(Q²)ₙSi(XCH₂V^{t-})₃₋ₙ]Y_{2/nr}^{+r} (I)

wherein:
each Q² is independently selected from hydroxyl, alkyl groups containing from 1 to 4 carbon atoms, and alkoxy groups containing from 1 to 4 carbon atoms;
M is selected from hydrogen, alkali metals, and organic cations of strong organic bases having an average molecular weight of less than 150 and a pKa of greater than 11;
X is an organic linking group;
V^{t-} is -SO₃⁻, -CO₂⁻, -OPO₃²⁻, -PO₃²⁻, -OP(=O)(R)O⁻, or a combination thereof,
wherein t is 1 or 2, and R is an aliphatic, aromatic, branched, linear, cyclic, or heterocyclic group (preferably having 20 carbons or less, more preferably R is aliphatic having 20 carbons or less, and even more preferably R is methyl, ethyl, propyl, or butyl);
Y is selected from hydrogen, alkaline earth metals (in particular, magnesium, calcium), organic cations of protonated weak bases having an average molecular weight of less than 200 and a pKa of less than 11 (in particular, 4-aminopyridine, 2-methoxyethylamine, benzylamine, 2,4-dimethylimidazole, 3-[2-ethoxy(2-ethoxyethoxy)]propylamine), alkali metals, and organic cations of strong organic bases having an average molecular weight of less than 150 and a pKa of greater than 11 (in particular, ⁺N(CH₃)₄, ⁺N(CH₂CH₃)₄), provided that M is hydrogen when Y is selected from hydrogen, alkaline earth metals and organic cations of said protonated weak bases;
r is equal to the valence of Y; and
n is 1 or 2.

In still a more preferred aspect of the present disclosure, the non-zwitterionic silanes for use herein have any of the following formula: 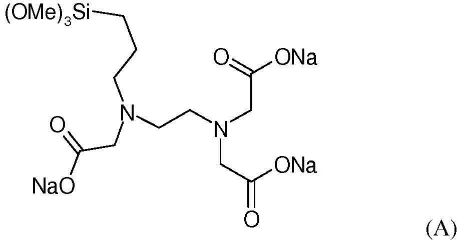 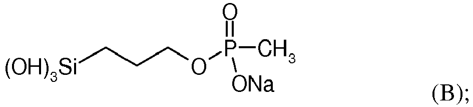 or

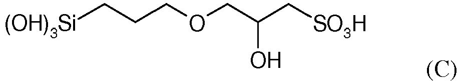

In still a more advantageous aspect of the present disclosure, the zwitterionic silanes for use herein have the following formula:

(R¹O)ₚ-Si(Q¹)_{q}-W-N⁺(R²)(R³)-(CH₂)ₘ-Z^{t-} (II)

wherein:
each R¹ is independently a hydrogen, methyl group, or ethyl group;
each Q¹ is independently selected from hydroxyl, alkyl groups containing from 1 to 4 carbon atoms, and alkoxy groups containing from 1 to 4 carbon atoms;
each R² and R³ is independently a saturated or unsaturated, straight chain, branched, or cyclic organic group (preferably having 20 carbons or less), which may be joined together, optionally with atoms of the group W, to form a ring;
W is an organic linking group;
Z^{t-} is -SO₃⁻, -CO₂⁻, -OPO₃²⁻, -PO₃²⁻, -OP(=O)(R)O⁻, or a combination thereof, wherein t is 1 or 2, and R is an aliphatic, aromatic, branched, linear, cyclic, or heterocyclic group (preferably having 20 carbons or less, more preferably R is aliphatic having 20 carbons or less, and even more preferably R is methyl, ethyl, propyl, or butyl);
p and m are integers of 1 to 10 (or 1 to 4, or 1 to 3);
q is 0 or 1; and
p+q=3.

According to a particularly preferred aspect of the coating composition of the present disclosure, the zwitterionic silanes have the following formula:

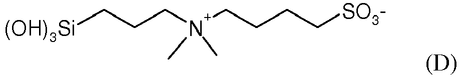

According to another particularly preferred aspect of the present disclosure, the first hydrophilic functional silane for use herein is selected from the group of non-zwitterionic silanes, in particular non-zwitterionic anionic silanes. More preferably, the first hydrophilic functional silane for use herein has formula (A).

According to a typical aspect, the coating composition according to the present disclosure comprises a first hydrophilic functional silane in an amount comprised between 0.01 wt% and 10 wt%, between 0.03 wt% and 8 wt%, between 0.05 wt% and 6 wt%, between 0.1 wt% and 5 wt%, between 0.3 wt% and 4 wt%, between 0.3 wt% and 3 wt%, between 0.3 wt% and 2.5 wt%, between 0.3 wt% and 2 wt%, between 0.3 wt% and 1.5 wt%, or even between 0.3wt% and 0.9 wt%, based on the weight of the overall coating composition.

According to an advantageous aspect of the disclosure, the coating composition may optionally comprise a second hydrophilic functional silane distinct from the first hydrophilic functional silane. The second hydrophilic functional silane may advantageously be chosen as described above for the first hydrophilic functional silane.

In a typical aspect, the second hydrophilic functional silane is selected from the group consisting of zwitterionic silanes, non-zwitterionic silanes, and any combinations thereof.

According to a preferred aspect of the present disclosure, the second hydrophilic functional silane for use herein has formula (II), more preferably formula (D).

According to a typical aspect, the coating composition according to the present disclosure comprises a second hydrophilic functional silane in an amount comprised between 0.005 wt% and 5 wt%, between 0.01wt% and 4 wt%, between 0.025 wt% and 3 wt%, between 0.05 wt% and 2.5 wt%, between 0.15 wt% and 2 wt%, between 0.1 wt% and 1.5 wt%, between 0.1wt% and 1 wt%, between 0.2 wt% and 1 wt%, between 0.3 wt% and 1 wt%, or even between 0.3 wt% and 0.7 wt%, based on the weight of the overall coating composition.

The coating composition of the present disclosure may comprise, as an optional but advantageous ingredient, a multivalent metal salt. Multivalent metal salts for use herein are not particularly limited. Any multivalent metal salts commonly known in the art may be used in the context of the present disclosure. Suitable multivalent metal salts for use herein will be easily identified by those skilled in the art, in the light of the present description.

In the context of the present disclosure, it has been surprisingly discovered that the coating compositions comprising a multivalent metal salt, are provided with improved durability, in particular against wet mechanical abrasion, when compared to similar coating compositions not comprising a multivalent metal salt. Without wishing to be bound by theory, it is believed that the multivalent metal salts present in the coating composition promote crosslinking within the resulting protective coating and lead to the forming of a more densely packed protective coating onto the chromium surface.

It has further been surprisingly discovered that the enhanced durability of the coating compositions comprising a multivalent metal salt is obtained on chromium surfaces having various roughness characteristics (low, medium and high roughness), in particular on chromium surfaces having a roughness Ra comprised between 0.2 µm and 1.5 µm, in particular between 0.5 µm and 0.9 µm, when determined by confocal laser microscopy according to ISO 25178-6. This is surprising finding as generally high roughness chromium surfaces are particularly challenging in terms of achieving durability and easy-to-clean properties towards oily contamination.

In the context of the present disclosure, a low roughness chromium surface is meant to designate a chromium surface having a roughness Ra of about 0.2 µm, when determined by confocal laser microscopy according to ISO 25178-6. A medium roughness chromium surface is meant to refer to a chromium surface having a roughness Ra of about 0.5 µm, when determined by confocal laser microscopy according to ISO 25178-6. A high roughness chromium surface is meant to designate a chromium surface having a roughness Ra of about 0.9 µm, when determined by confocal laser microscopy according to ISO 25178-6.

According to a particular aspect of the coating composition of the present disclosure, the multivalent metal salt for use herein is a cation of a multivalent metal. In a preferred aspect, the multivalent metal salt for use herein is selected from the group consisting of zinc, aluminum, zirconium, chromium, iron, manganese, titanium, calcium, magnesium, and any combinations thereof.

According to a particular aspect of the coating composition of the present disclosure, the multivalent metal salt comprises a cation of a multivalent metal selected from the group consisting of zinc, aluminum, zirconium, and any combinations thereof.

In a preferred aspect, the multivalent metal salt for use herein comprises a cation of aluminum.

In a more preferred aspect, the multivalent metal salt comprises a cation of a multivalent metal selected from the group consisting of Zn(II), Al(III), Zr(IV), Cr(III), Fe(II), Ca(II), Mg(II), Cu(II), Ti(IV), Mn(II), Mn(IV), Fe(III), Sn(II), Sn(IV), Ni(II), and any combinations thereof. In another more preferred aspect, the multivalent metal salt comprises a cation of a multivalent metal selected from the group consisting of Zn(II) and Al(III). In an even more preferred aspect of the protective coating composition, the multivalent metal salt is a nitrate salt of a cation of a multivalent metal. According to a particularly preferred aspect, the multivalent metal salt for use herein is derived from Al(III), and is preferably selected to be Al(NO₃)₃.

According to a typical aspect, the coating composition according to the present disclosure comprises a multivalent metal salt in an amount comprised between 0.005 wt% and 5 wt%, between 0.015 wt% and 4 wt%, between 0.025 wt% and 3 wt%, between 0.05 wt% and 2.5 wt%, between 0.15 wt% and 2 wt%, between 0.15 wt% and 1.5 wt%, between 0.15 wt% and 1 wt%, between 0.2 wt% and 1 wt%, between 0.2 wt% and 0.8 wt%, between 0.2 wt% and 0.6 wt%, or even between 0.2 wt% and 0.4 wt%, based on the weight of the overall coating composition.

The coating composition of the present disclosure may comprise, as an optional but advantageous ingredient, a metal silicate. Metal silicates for use herein are not particularly limited. Any metal silicates commonly known in the art may be used in the context of the present disclosure. Suitable metal silicates for use herein will be easily identified by those skilled in the art, in the light of the present description.

In the context of the present disclosure, it has been discovered that the coating compositions comprising a metal silicate, are provided with enhanced durability, in particular against wet mechanical abrasion, when compared to similar coating compositions not comprising a metal silicate. Without wishing to be bound by theory, it is believed that the metal silicates present in the coating composition promote crosslinking within the resulting protective coating onto the chromium surface.

According to an advantageous aspect, the coating further comprises a metal silicate which is an alkali metal silicate. Advantageously, the metal silicate for use herein is selected from the group consisting of lithium silicate, sodium silicate, potassium silicate, and any combinations thereof. In a particular advantageous aspect, the metal silicate for use herein is chosen to be lithium silicate.

According to a typical aspect, the coating composition according to the present disclosure comprises a metal silicate in an amount comprised between 0.005 wt% and 5 wt%, between 0.01 wt% and 4 wt%, between 0.025 wt% and 3 wt%, between 0.05 wt% and 2.5 wt%, between 0.05 wt% and 2 wt%, between 0.05 wt% and 1.5 wt%, between 0.1 wt% and 1.5 wt%, between 0.1 wt% and 1 wt%, between 0.2 wt% and 1 wt%, or even between 0.2 wt% and 0.8 wt%, based on the weight of the overall coating composition.

Although the incorporation of a metal silicate into the coating composition of the present disclosure is decidedly advantageous, it has been found that the use of a metal silicate is less beneficial than the use of a multivalent metal salt in terms of achieving durability characteristics in demanding high roughness chromium surfaces. Also, it was found that the coating formulations comprising a metal silicate may in some executions, in particular in coating compositions having a relatively high content of metal silicate, result in coating compositions having less favourable visual characteristics (e.g. stained and chalky appearance) on chromium surfaces, when compared to similar coating compositions comprising a multivalent metal salt.

The coating composition of the present disclosure comprises, as a further technical feature, a solvent comprising water. Solvents for use herein are not particularly limited. Any solvent comprising water commonly known in the art may be used in the context of the present disclosure. Suitable water-comprising solvents for use herein will be easily identified by those skilled in the art, in the light of the present description.

Examples of suitable water-comprising solvents for use herein include solvents comprising water and optionally also water-miscible solvents. Examples of suitable water-miscible solvents are primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable water-miscible solvents include water-soluble ethers, such as dipropyleneglycol monomethylether (DPM) or diethylene glycol dimethylether (Diglyme).

According to one exemplary aspect of the coating composition of the present disclosure, the solvent for use herein comprises a combination of water and an organic solvent, in particular an alcohol. Examples of suitable alcohols for use herein include, but are not limited to, methanol, ethanol, propanol and isopropanol. Particular examples of suitable water-comprising solvents for use herein include solvent combinations of water and alcohols such as e.g. water/methanol, water/ethanol, water/propanol or water/isopropanol.

According to a typical aspect of the coating composition of the present disclosure, the solvent for use herein has a water content of at least 25 wt%, at least 30 wt%, at least 40 wt%, at least 50 wt%, at least 70 wt%, at least 80 wt%, at least 90 wt%, at least 95 wt%, or even at least 98 wt%, based on the weight of the solvent.

In a preferred aspect of the coating composition, the solvent for use herein consists essentially of water, preferably deionized water.

According to a preferred execution, the protective coating composition according to the present disclosure, comprises:
a) from 0.01 wt% to 10 wt%, from 0.05 wt% to 6 wt%, from 0.3 wt% to 4 wt%, from 0.3 wt% to 3 wt%, from 0.3 wt% to 2 wt%, or even from 0.3 wt% to 0.9 wt%, of a first hydrophilic functional silane;
b) from 0 wt% to 5 wt%, from 0.015 wt% to 4 wt%, from 0.05 wt% to 2.5 wt%, from 0.15 wt% to 1.5 wt%, from 0.2 wt% to 1 wt%, or even from 0.3 wt% to 0.7 wt% of a second hydrophilic functional silane;
c) from 0 wt% to 5 wt%, from 0.015 wt% to 4 wt%, between 0.05 wt% and 2.5 wt%, between 0.15 wt% and 1.5 wt%, from 0.2 wt% to 1 wt%, or even from 0.2 wt% to 0.6 wt% of a multivalent metal salt;
d) from 0 wt% to 5 wt%, from 0.015 wt% to 4 wt%, between 0.05 wt% and 2.5 wt%, between 0.15 wt% and 1.5 wt%, from 0.2 wt% to 1 wt%, or even from 0.2 wt% to 0.8 wt% of a metal silicate; and
e) from 1 to 99 wt% of water,
based on the weight of the overall coating composition.

According to an exemplary aspect, the protective coating composition of the present disclosure has a concentration (solid content) of active agents (first hydrophilic functional silane / second hydrophilic functional silane / multivalent metal salt / metal silicate) of less than 20 wt%, less than 15 wt%, less than 10 wt%, less than 8 wt%, less than 6 wt%, or even less than 5 wt%, based on the weight of the overall coating composition.

More typically, the protective coating composition has a concentration (solid content) of active agents (first hydrophilic functional silane / second hydrophilic functional silane / multivalent metal salt / metal silicate) comprised between 0.01 wt% and 15 wt%, between 0.05 wt% and 10 wt%, between 0.1 wt% and 8 wt%, between 0.5 wt% and 8 wt%, between 0.5 wt% and 6 wt%, between 1 wt% and 6 wt%, between 1 wt% and 5 wt%, or even between 1 wt% and 3 wt%, based on the weight of the overall coating composition.

The coating composition of the present disclosure may further comprise optional additives commonly known in the field. Suitable additives will be typically selected depending on the targeted application. Exemplary additives include, but are not limited to, surface-active compounds, corrosion inhibitors, complexing agents, galvanization assistants, coating additives, coloring pigments, chelating agents, detergents, stabilizers, dispersants, enzymes, dyes or perfumes.

According to an advantageous aspect, the protective coating composition is free of a metal silicate, in particular free of an alkali metal silicate. According to another advantageous aspect, the protective coating composition of the present disclosure comprises a solvent which is substantially free of any organic solvent, in particular an alcohol.

The coating composition according to the present disclosure may be obtained according to techniques commonly known in the art. In a typical aspect, the coating composition is obtained by simply mixing the various ingredients - including the various hydrophilic functional silane(s) and optionally, the multivalent metal salt and/or the metal silicate - into the solvent. The hydrophilic functional silane(s) for use herein may be obtained by commonly known synthetic techniques or may be commercially purchased and used as such.

The coating compositions of the present disclosure may be in the form of a solution, emulsion, suspension, dispersion or aerosol, depending on the targeted application. According to a typical aspect, the coating composition is in the form of an aqueous solution.

As already mentioned, the term "chromium surface" is meant to designate a metallic surface having a chromium content of at least 50wt%, based on the weight of the metallic surface. Suitable chromium surfaces for use herein will be easily identified by those skilled in the art, in the light of the present description.

Chromium surfaces for use herein may of course also be provided with a thin oxidic (such as Cr₂O₃ and CrO) or hydroxidic surface layer. Such layers, which are usually formed spontaneously on the chromium surfaces when exposed to the ambient conditions, are meant to be included in the term "chromium surface". Further, chromium oxides and chromium hydroxides which may be present in the chromium surface are also meant to be included in the term 'chromium content".

In a particular aspect of the disclosure, the chromium surface for use herein is a metallic surface having a chromium content of at least 50 wt%, at least 70 wt%, at least 80 wt%, at least 90 wt%, at least 95 wt%, or even at least 98 wt%, based on the weight of the metallic surface. In another particular aspect, the chromium surface for use herein consists essentially of chromium ("pure" chromium).

Chromium surfaces for use herein may advantageously refer to a metallic surface comprising a metallic alloy having a chromium content of at least 50wt%, based on the weight of the metallic alloy. According to one particular aspect of the present disclosure, the chromium surface for use herein comprises a chromium containing alloy. Chromium containing alloys are commonly known to those skilled in the art. The type and amounts of alloying constituents is determined in accordance with the desired end application. Exemplary constituents of chromium alloys include, in particular Zn, Al, Pb, Si, Mg, Sn, Cu, Cd, Fe, Co, Ni, Mn, Zr or Ti.

A chromium surface may refer to the surface of a structure or a part composed entirely of chromium or a chromium-containing metallic alloy having a chromium content of at least 50wt%, based on the weight of the metallic alloy. Alternatively, a chromium surface may refer to the surface of a structure or a part coated or plated with pure chromium or with a chromium-containing metallic alloy having a chromium content of at least 50wt%, based on the weight of the metallic alloy. Structures or parts coated or plated with chromium or a chromium-containing metallic alloy may be composed of other materials, such as e.g. other metals or metal alloys, polymers or composites.

According to an advantageous aspect, the chromium surface for use herein may be present on a chrome-plated part, in particular a part chrome-plated by a galvanization process, in particular electrolytical galvanization or hot-dip galvanization process. In a particular aspect, the chromium surface is present on a part composed of a polymeric or composite material. According to an exemplary aspect, the polymeric or composite material is selected from the group consisting of polyolefins (polypropylene, polyethylene, high density polyethylene, blends of polypropylene), polyamide 6 (PA6), acrylonitrile butadiene styrene (ABS), PC/ABS blends, Polycarbonate (PC), Polyvinyl chloride (PVC), polyamide (PA), PUR, TPE, POM, polystyrene, poly(methyl) methacrylate, clear coats for vehicles, composite materials like fiber reinforced plastics, and any combinations or mixtures thereof.

In a particular aspect, the chromium surface for use herein is present on a chrome-plated part comprising or being composed of acrylonitrile butadiene styrene (ABS).

Oily contamination for use herein are not particularly limited. Any oily contamination commonly encountered on metallic surfaces present for example in articles or parts present in home or commercial kitchens, in decorative household appliances and lighting, in restrooms, in bathrooms, in automotive vehicles, or in consumer electronics, may be used in the context of the present disclosure. Suitable oily contamination for use herein will be easily identified by those skilled in the art, in the light of the present description. Exemplary oily contamination for use herein include, but are not limited to, stains originating from oily or fat components.

In a particular aspect of the coating composition according to the disclosure, the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof.

According to a preferred aspect, the oily contamination takes the form of a fingerprint.

In another aspect, the present disclosure is directed to a method of reducing oily contamination from a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

In still another aspect, the present disclosure is directed to a method of imparting oily contamination removal properties to a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

In yet another aspect of the present disclosure, it is provided a method of treating a chromium surface, which comprises the steps of:
a) providing a chromium surface;
b) applying a coating composition as described above to the chromium surface thereby forming a layer of the coating composition adjacent to the chromium surface; and
c) drying and/or curing the layer of the coating composition thereby forming a coating layer adjacent to the chromium surface.

The step of applying the coating composition may be performed according to techniques commonly known in the art. Suitable application methods depend on the number, size and shape of the chromium surface part to be treated, ad are not particularly limited. Exemplary applications techniques include, but are not limited to, spraying, rolling, wiping or dipping. In a particular aspect, the step of applying the coating composition is performed by wiping or dipping.

The step of applying the coating composition may comprise a plurality of individual process steps, including pretreatment steps of the chromium surface. For example, the chromium surface may be cleaned with a suitable preparation before treatment or treated with a suitable physical surface treatment such as e.g. corona or plasma treatment. The chromium may be appropriately washed after and between such pre-treatment steps.

After the step of applying the coating composition, the treated chromium surface may be allowed to drip off to remove the excess of coating compositions. The excess coating composition and any resulting residues may alternatively be removed by means of a wipe, a squeegee or doctor blade. As an additional, but optional step, the layer of coating composition formed onto the chromium surface after the application step may be subjected to a drying and/or curing step. The drying and/or curing may be performed according to techniques well known in the art. Suitable drying and/or curing may be performed at room temperature or at elevated temperature, typically at temperatures comprised between 20°C and 210°C, in particular between 20°C and 180°C. Conditions and temperatures for performing the drying and/or curing step may be appropriately chosen by the person skilled in the art. A typical drying and/or curing step may be performed e.g. in an appropriate oven.

According to a typical aspect of the methods as described above, the drying/curing step, in particular the curing step, is performed at elevated temperatures typically comprised between 60°C and 220°C, between 80°C and 200°C, between 100°C and 180°C, between 120°C and 160°C, or even between 130°C and 150°C.

All particular and preferred aspects relating to, in particular, the hydrophilic functional silane(s), the multivalent metal salt, the metal silicate, the solvent, the chromium surface and the oily contamination as described above in the context of the coating composition, are fully applicable to the description of the methods of the present disclosure, as described above.

According to still another aspect, the present disclosure is directed to a coated article comprising a chromium surface and a coating layer adjacent to the chromium surface, wherein the coating layer comprises a layer of the coating composition as described above which has been dried and/or cured onto the chromium surface.

According to yet another aspect, the present disclosure relates to an article having oily contamination removal properties, which comprises a chromium surface and a coating layer adjacent to the chromium surface, wherein the coating layer comprises a layer of the coating composition as described above which has been dried and/or cured onto the chromium surface.

All particular and preferred aspects relating to, in particular, the hydrophilic functional silane(s), the multivalent metal salt, the metal silicate, the solvent, the chromium surface and the oily contamination as described above in the context of the coating composition, are fully applicable to the description of the coated article and article of the present disclosure, as described above.

In a particular aspect of the coated article, the chromium surface consists essentially of chromium. In another particular aspect of the coated article, the chromium surface comprises a chromium containing alloy. In still another particular aspect of the coated article, the chromium surface is a chromated surface, in particular a chrome plated substrate, more in particular a chrome plated polymeric or composite substrate.

According to an exemplary aspect of the coated article, the oily contamination takes the form of a fingerprint. According to another exemplary aspect of the coated article, the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

According to an advantageous aspect of the coated article or the article as described herein, the protective coating layer has a thickness of less than 1000 nm, less than 800 nm, less than 600 nm, less than 400 nm, less than 200 nm, less than 100 nm, or even less than 50 nm.

In still another advantageous aspect of the coated article or the article as described herein, the protective coating layer has a thickness comprised between 2 and 1000 nm, between 4 and 800 nm, between 5 and 600 nm, between 5 and 400 nm, between 10 and 200 nm, between 10 and 100 nm, or even between 10 and 50 nm.

According to an advantageous aspect, the coated article according to the disclosure has an oily contamination removal performance of less than 7 wet wipes, preferably less than 5 wet wipes, more preferably less than 3 wet wipes, even more preferably less than 2 wet wipes, after 200 wet mechanical abrasion cycles when measured according to the wet mechanical abrasion test method described in the experimental section.

According to another advantageous aspect, the coated article according to the disclosure has an oily contamination removal performance of less than 7 wet wipes, preferably less than 5 wet wipes, more preferably less than 3 wet wipes, even more preferably less than 2 wet wipes, after 500 wet mechanical abrasion cycles when measured according to the wet mechanical abrasion test method described in the experimental section.

According to still another advantageous aspect, the coated article according to the disclosure has an oily contamination removal performance of less than 7 wet wipes, preferably less than 5 wet wipes, more preferably less than 3 wet wipes, even more preferably less than 2 wet wipes, after 1000 wet mechanical abrasion cycles when measured according to the wet mechanical abrasion test method described in the experimental section.

According to still another aspect, the present disclosure relates to the use of a coating composition as described above for reducing oily contamination from a chromium surface.

In yet another aspect, the present disclosure relates to the use of a coating composition as described above for imparting oily contamination removal properties to a chromium surface.

All particular and preferred aspects relating to, in particular, the hydrophilic (co)polymer, the multivalent metal salt, the solvent, the chromium surface and the oily contamination as described above in the context of the coating composition, are fully applicable to the description of uses of the present disclosure, as described above.
Item 1 is a protective coating composition for reducing oily contamination from a chromium surface, wherein the composition comprises:
   a) a first hydrophilic functional silane;
   b) optionally, a second hydrophilic functional silane distinct from the first hydrophilic functional silane;
   c) optionally, a multivalent metal salt;
   d) optionally a metal silicate; and
   e) a solvent comprising water.
Item 2 is the coating composition according to item 1, wherein the first hydrophilic functional silane, and optionally the second hydrophilic functional silane, is selected from the group consisting of zwitterionic silanes, non-zwitterionic silanes, and any combinations thereof.
Item 3 is a coating composition according to item 2, wherein the zwitterionic silanes and the non-zwitterionic silanes comprise functional groups selected from the group consisting of carboxylate groups, sulfonate groups, quarternary ammonium groups, phosphonate groups, phosphate groups, hydroxyl groups, amine groups, amide groups, and any combinations thereof.
Item 4 is a coating composition according to any of item 2 or 3, wherein the non-zwitterionic silanes are selected from cationic, anionic and nonionic silanes.
Item 5 is a coating composition according to any of items 2 to 4, wherein the non-zwitterionic silanes comprise functional groups selected from the group consisting of carboxylate groups, sulfonate groups, phosphonate groups, hydroxyl groups, amines groups, and any combinations thereof.
Item 6 is a coating composition according to any of items 2 to 5, wherein the non-zwitterionic silanes have the following formula:

   [(MO)(Q²)ₙSi(XCH₂V^{t-})₃₋ₙ]Y_{2/nr}^{+r} (I)

   wherein:
   each Q² is independently selected from hydroxyl, alkyl groups containing from 1 to 4 carbon atoms, and alkoxy groups containing from 1 to 4 carbon atoms;
   M is selected from hydrogen, alkali metals, and organic cations of strong organic bases having an average molecular weight of less than 150 and a pKa of greater than 11;
   X is an organic linking group;
   V^{t-} is -SO₃⁻, -CO₂⁻, -OPO₃²⁻, -PO₃²⁻, -OP(=O)(R)O⁻, or a combination thereof,
   wherein t is 1 or 2, and R is an aliphatic, aromatic, branched, linear, cyclic, or heterocyclic group (preferably having 20 carbons or less, more preferably R is aliphatic having 20 carbons or less, and even more preferably R is methyl, ethyl, propyl, or butyl);
   Y is selected from hydrogen, alkaline earth metals (in particular, magnesium, calcium), organic cations of protonated weak bases having an average molecular weight of less than 200 and a pKa of less than 11 (in particular, 4-aminopyridine, 2-methoxyethylamine, benzylamine, 2,4-dimethylimidazole, 3-[2-ethoxy(2-ethoxyethoxy)]propylamine), alkali metals, and organic cations of strong organic bases having an average molecular weight of less than 150 and a pKa of greater than 11 (in particular, ⁺N(CH₃)₄, ⁺N(CH₂CH₃)₄), provided that M is hydrogen when Y is selected from hydrogen, alkaline earth metals and organic cations of said protonated weak bases;
   r is equal to the valence of Y; and
   n is 1 or 2.
Item 7 is a coating composition according to any of items 2 to 5, wherein the non-zwitterionic silanes have any of the following formula: 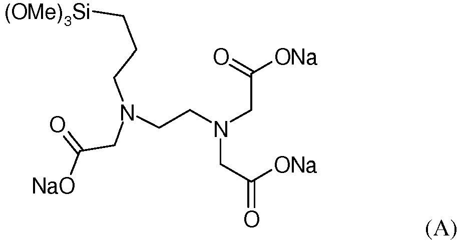 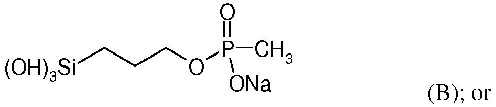 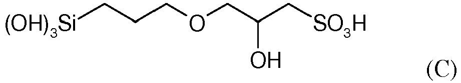
Item 8 is a coating composition according to any of items 1 to 4, wherein the zwitterionic silanes have the following formula:

   (R¹O)ₚ-Si(Q¹)_{q}-W-N⁺(R²)(R³)-(CH₂)ₘ-Z^{t-} (II)

   wherein:
   each R¹ is independently a hydrogen, methyl group, or ethyl group;
   each Q¹ is independently selected from hydroxyl, alkyl groups containing from 1 to 4 carbon atoms, and alkoxy groups containing from 1 to 4 carbon atoms;
   each R² and R³ is independently a saturated or unsaturated, straight chain, branched, or cyclic organic group (preferably having 20 carbons or less), which may be joined together, optionally with atoms of the group W, to form a ring;
   W is an organic linking group;
   Z^{t-} is -SO₃⁻, -CO₂⁻, -OPO₃²⁻, -PO₃²⁻, -OP(=O)(R)O⁻, or a combination thereof, wherein t is 1 or 2, and R is an aliphatic, aromatic, branched, linear, cyclic, or heterocyclic group (preferably having 20 carbons or less, more preferably R is aliphatic having 20 carbons or less, and even more preferably R is methyl, ethyl, propyl, or butyl);
   p and m are integers of 1 to 10 (or 1 to 4, or 1 to 3);
   q is 0 or 1; and
   p+q=3.
Item 9 is a coating composition according to item 8, wherein the zwitterionic silanes have the following formula: 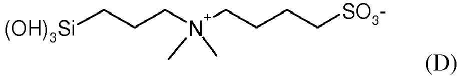
Item 10 is a coating composition according to any of the preceding items, wherein the first hydrophilic functional silane is selected from the group of non-zwitterionic silanes, in particular non-zwitterionic anionic silanes.
Item 11 is a coating composition according to item 10, wherein the first hydrophilic functional silane has formula (A).
Item 12 is a coating composition according to any of the preceding items, which comprises a second hydrophilic functional silane having preferably formula (II), more preferably formula (D).
Item 13 is a coating composition according to any of the preceding items, which further comprises a multivalent metal salt, wherein the multivalent metal salt is preferably a cation of a multivalent metal selected from the group consisting of zinc, aluminum, zirconium, chromium, iron, manganese, titanium, calcium, magnesium, and any combinations thereof.
Item 14 is a coating composition according to any of the preceding items, wherein the multivalent metal salt comprises a cation of a multivalent metal selected from the group consisting of zinc, aluminum, zirconium, and any combinations thereof.
Item 15 is a coating composition according to any of the preceding items, wherein the multivalent metal salt comprises a cation of aluminum.
Item 16 is a coating composition according to any of the preceding items, wherein the multivalent metal salt comprises a cation of a multivalent metal selected from the group consisting of Zn(II), Al(III), Zr(IV), Cr(III), Fe(II), Ca(II), Mg(II), Cu(II), Ti(IV), Mn(II), Mn(IV), Fe(III), Sn(II), Sn(IV), Ni(II), and any combinations thereof.
Item 17 is a coating composition according to any of the preceding items, wherein the multivalent metal salt is a nitrate salt of a cation of a multivalent metal.
Item 18 is a coating composition according to any of the preceding items, wherein the multivalent metal salt is derived from Al(III), and is preferably selected to be Al(NO₃)₃.
Item 19 is a coating composition according to any of the preceding items, which further comprises a metal silicate, wherein the metal silicate is preferably an alkali metal silicate.
Item 20 is a coating composition according to any of the preceding items, wherein the metal silicate is selected from the group consisting of lithium silicate, sodium silicate, potassium silicate, and any combinations thereof.
Item 21 is a coating composition according to any of the preceding items, wherein the solvent consists essentially of water, preferably deionized water.
Item 22 is a coating composition according to any of the preceding items, wherein the solvent has a water content of at least 70 wt%, at least 80 wt%, at least 90 wt%, at least 95 wt%, or even at least 98 wt%, based on the weight of the solvent.
Item 23 is a coating composition according to any of the preceding items, which comprises a first hydrophilic functional silane in an amount comprised between 0.01 wt% and 10 wt%, between 0.03 wt% and 8 wt%, between 0.05 wt% and 6 wt%, between 0.1 wt% and 5 wt%, between 0.3 wt% and 4 wt%, between 0.3 wt% and 3 wt%, between 0.3 wt% and 2.5 wt%, between 0.3 wt% and 2 wt%, between 0.3 wt% and 1.5 wt%, or even between 0.3 wt% and 0.9 wt%, based on the weight of the overall coating composition.
Item 24 is a coating composition according to any of the preceding items, which comprises a second hydrophilic functional silane in an amount comprised between 0.005 wt% and 5 wt%, between 0.015 wt% and 4 wt%, between 0.025 wt% and 3 wt%, between 0.05 wt% and 2.5 wt%, between 0.15 wt% and 2 wt%, between 0.1 wt% and 1.5 wt%, between 0.1 wt% and 1 wt%, between 0.2 wt% and 1 wt%, between 0.3 wt% and 1 wt%, or even between 0.3 wt% and 0.7 wt%, based on the weight of the overall coating composition.
Item 25 is a coating composition according to any of the preceding items, which comprises a multivalent metal salt in an amount comprised between 0.005 wt% and 5 wt%, between 0.015 wt% and 4 wt%, between 0.025 wt% and 3 wt%, between 0.05 wt% and 2.5 wt%, between 0.15 wt% and 2 wt%, between 0.15 wt% and 1.5 wt%, between 0.15 wt% and 1 wt%, between 0.2 wt% and 1 wt%, between 0.2 wt% and 0.8 wt%, between 0.2 wt% and 0.6 wt%, or even between 0.2 wt% and 0.4 wt%, based on the weight of the overall coating composition.
Item 26 is a coating composition according to any of the preceding items, which comprises a metal silicate in an amount comprised between 0.005 wt% and 5 wt%, between 0.01 wt% and 4 wt%, between 0.025 wt% and 3 wt%, between 0.05 wt% and 2.5 wt%, between 0.05 wt% and 2 wt%, between 0.05 wt% and 1.5 wt%, between 0.1 wt% and 1.5 wt%, between 0.1 wt% and 1 wt%, between 0.2 wt% and 1 wt%, or even between 0.2 wt% and 0.8 wt%, based on the weight of the overall coating composition.
Item 27 is a coating composition according to any of the preceding items, which comprises:
   a) from 0.01 wt% to 10 wt%, from 0.05 wt% to 6 wt%, from 0.3 wt% to 4 wt%, from 0.3 wt% to 3 wt%, from 0.3 wt% to 2 wt%, or even from 0.3 wt% to 0.9 wt%, of a first hydrophilic functional silane;
   b) from 0 wt% to 5 wt%, from 0.015 wt% to 4 wt%, from 0.05 wt% to 2.5 wt%, from 0.15 wt% to 1.5 wt%, from 0.2 wt% to 1 wt%, or even from 0.3 wt% to 0.7 wt% of a second hydrophilic functional silane;
   c) from 0 wt% to 5 wt%, from 0.015 wt% to 4 wt%, between 0.05 wt% and 2.5 wt%, between 0.15 wt% and 1.5 wt%, from 0.2 wt% to 1 wt%, or even from 0.2 wt% to 0.6 wt% of a multivalent metal salt;
   d) from 0 wt% to 5 wt%, from 0.015 wt% to 4 wt%, between 0.05 wt% and 2.5 wt%, between 0.15 wt% and 1.5 wt%, from 0.2 wt% to 1 wt%, or even from 0.2 wt% to 0.8 wt% of a metal silicate; and
   e) from 1 to 99 wt% of water,
   based on the weight of the overall coating composition.
Item 28 is a coating composition according to any of the preceding items, which has a concentration (solid content) of active agents (first hydrophilic functional silane / second hydrophilic functional silane / multivalent metal salt / metal silicate) of less than 20 wt%, less than 15 wt%, less than 10 wt%, less than 8 wt%, less than 6 wt%, or even less than 5 wt%, based on the weight of the overall coating composition.
Item 29 is a coating composition according to any of the preceding items, which has a concentration (solid content) of active agents (first hydrophilic functional silane / second hydrophilic functional silane / multivalent metal salt / metal silicate) comprised between 0.01 wt% and 15 wt%, between 0.05 wt% and 10 wt%, between 0.1 wt% and 8 wt%, between 0.5 wt% and 8 wt%, between 0.5 wt% and 6 wt%, between 1 wt% and 6 wt%, between 1 wt% and 5 wt%, or even between 1 wt% and 3 wt%, based on the weight of the overall coating composition.
Item 30 is a coating composition according to any of the preceding items, which is free a metal silicate, in particular free of an alkali metal silicate.
Item 31 is a coating composition according to any of the preceding items, wherein the solvent is substantially free of any organic solvent, in particular an alcohol.
Item 32 is a coating composition according to any of the preceding items, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.
Item 33 is a coating composition according to any of the preceding items, wherein the chromium surface consists essentially of chromium.
Item 34 is a coating composition according to any of the preceding items, wherein the chromium surface comprises a chromium containing alloy.
Item 35 is a coating composition according to any of the preceding items, wherein the chromium surface is a chromated surface, in particular a chrome plated substrate, more in particular a chrome plated polymeric or composite substrate.
Item 36 is a coating composition according to any of the preceding items, wherein the oily contamination takes the form of a fingerprint.
Item 37 is a coating composition according to any of the preceding items, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.
Item 38 is a method of treating a chromium surface, which comprises the steps of:
   a) providing a chromium surface;
   b) applying a coating composition according to any of the preceding items to the chromium surface thereby forming a layer of the coating composition adjacent to the chromium surface; and
   c) drying and/or curing the layer of the coating composition thereby forming a coating layer adjacent to the chromium surface
Item 39 is a method of reducing oily contamination from a chromium surface, which comprises the steps of:
   a) providing a chromium surface;
   b) applying a coating composition according to any of items 1 to 37 to the chromium surface thereby forming a layer of the coating composition adjacent to the chromium surface; and
   c) drying and/or curing the layer of the coating composition thereby forming a coating layer adjacent to the chromium surface.
Item 40 is a method of imparting oily contamination removal properties to a chromium surface, which comprises the steps of:
   a) providing a chromium surface;
   b) applying a coating composition according to any of items 1 to 37 to the chromium surface thereby forming a layer of the coating composition adjacent to the chromium surface; and
   c) drying and/or curing the layer of the coating composition thereby forming a coating layer adjacent to the chromium surface.
Item 41 is a method according to any of items 38 to 40, wherein the drying/curing step, in particular the curing step, is performed at elevated temperatures typically comprised between 60°C and 220°C, between 80°C and 200°C, between 100°C and 180°C, between 120°C and 160°C, or even between 130°C and 150°C.
Item 42 is a coated article comprising a chromium surface and a protective coating layer adjacent to the chromium surface, wherein the protective coating layer comprises a layer of the protective coating composition according to any of items 1 to 37 which has been dried and/or cured onto the chromium surface.
Item 43 is a coated article according to item 42, wherein the chromium surface consists essentially of chromium.
Item 44 is a coated article according to item 42, wherein the chromium surface comprises a chromium containing alloy.
Item 45 is a coated article according to item 42, wherein the chromium surface is a chromated surface, in particular a chrome plated substrate, more in particular a chrome plated polymeric or composite substrate.
Item 46 is a coated article according to any of items 42 to 45, wherein the oily contamination takes the form of a fingerprint.
Item 47 is a coated article according to any of items 42 to 46, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.
Item 48 is a coated article according to any of items 42 to 47, which has an oily contamination removal performance of less than 7 wet wipes, preferably less than 5 wet wipes, more preferably less than 3 wet wipes, even more preferably less than 2 wet wipes, after 200 wet mechanical abrasion cycles when measured according to the wet mechanical abrasion test method described in the experimental section.
Item 49 is a coated article according to any of items 42 to 48, which has an oily contamination removal performance of less than 7 wet wipes, preferably less than 5 wet wipes, more preferably less than 3 wet wipes, even more preferably less than 2 wet wipes, after 500 wet mechanical abrasion cycles when measured according to the wet mechanical abrasion test method described in the experimental section.
Item 50 is a coated article according to any of items 42 to 49, which has an oily contamination removal performance of less than 7 wet wipes, preferably less than 5 wet wipes, more preferably less than 3 wet wipes, even more preferably less than 2 wet wipes, after 1000 wet mechanical abrasion cycles when measured according to the wet mechanical abrasion test method described in the experimental section.
Item 51 is an article having oily contamination removal properties, which comprises a chromium surface and a protective coating layer adjacent to the chromium surface, wherein the protective coating layer comprises a layer of the protective coating composition according to any of items 1 to 37 which has been dried and/or cured onto the chromium surface.
Item 52 is a coated article or an article according to any of items 42 to 51, wherein the protective coating layer has a thickness of less than 1000 nm, less than 800 nm, less than 600 nm, less than 400 nm, less than 200 nm, less than 100 nm, or even less than 50 nm.
Item 53 is coated article or an article according to any of items 42 to 52, wherein the protective coating layer has a thickness comprised between 2 and 1000 nm, between 4 and 800 nm, between 5 and 600 nm, between 5 and 400 nm, between 10 and 200 nm, between 10 and 100 nm, or even between 10 and 50 nm.
Item 54 is the use of a coating composition according to any of items 1 to 37 for reducing oily contamination from a chromium surface.
Item 55 is the use of a coating composition according to any of items 1 to 37 for imparting oily contamination removal properties to a chromium surface.

### EXAMPLES

The present disclosure is further illustrated by the following examples. These examples are merely for illustrative purposes only and are not meant to be limiting on the scope of the appended claims.

### Test methods and procedures:

### Fingerprint removal testing

A fingerprint using artificial finger fat (AFF) is applied onto the test chromium surface with a force of 30N for 5 seconds and left to dry for 5 minutes or for 12 hours at room temperature. The artificial finger fat AFF is obtained by combining: 50g of artificial alkaline sweat (according to DIN EN ISO 105-E04), 2g of paraffin oil (commercially available from Sigma-Aldrich), 1.5g Lecithin (Fluidlecithin Super, commercially available from Brennessel, Munich, Germany) and 0.3g of PNC 400 (polymer commercially available from Brennessel, Munich, Germany).

The removal of the fingerprint is performed by wiping the fingerprint-contaminated surface with a wet kimwipe (dimension 0.3 cm x 0.5 cm, immersed with 0.5 ml of deionized water) using a force of 10N. The fingerprint removal performance is measured either after drying the fingerprint-contaminated coated chromium surface at room temperature for 5 minutes (immediate wet removal) or for 12 hours (overnight wet removal).

The fingerprint removal performance is reflected by the number of wet wipes necessary to completely remove the fingerprint (assessed by visual inspection). If complete removal of the fingerprint is not achieved after 7 wet wipes, the fingerprint removal performance test is not passed and the trial is characterized as "fail". The fingerprint removal performance is measured on the as-deposited coating composition (zero wet abrasion wipes "0x").

### Mechanical wet abrasion testing (Durability testing)

Abrasion tests are performed on a 5900 Reciprocating Abraser (available from Taber Industries) by employing a 10N force and a velocity of 60 cycles/minutes. The cloth used for the abrasion cycles is a 13.5 crockmeter cloth (crockmeter squares, 100% cotton) wetted with deionized water.

The durability of the coatings is measured after subjecting the coating to various wet abrasion wipes (200x, 500x or 1000x) - as detailed above - followed by fingerprint removal testing. If complete removal of the fingerprint (assessed by visual inspection) is not achieved after 7 wet wipes, the durability performance test is not passed and the trial is characterized as "fail".

### Test panels/substrates used for testing:

a) Chrome plated ABS test substrates having low roughness (0.2 µm, determined by confocal laser microscopy) are available from HSO GmbH (Solingen, Germany). These test panels have a dimension of 100 mm x 50 mm x 2 mm, and will thereafter referred to as "ZM" substrates.
b) Chrome plated ABS test substrates having medium roughness (0.5 µm, determined by confocal laser microscopy) are available from HSO GmbH (Solingen, Germany). The test panels have a dimension of 100 mm x 50 mm x 2 mm, and will thereafter referred to as "SM" substrates.
c) Chrome plated ABS test substrates having high roughness (0.9 µm, determined by confocal laser microscopy) are available from HSO GmbH (Solingen, Germany). The test panels have a dimension of 100 mm x 50 mm x 2 mm, and will thereafter referred to as "GM" substrates.

### Materials employed:

In the examples, the following raw materials are used:
**EDTA-Silane** ("EDTA-Sil") of formula (A) is N-[(3-Trimethoxysilyl)propyl)] ethylenediamine triacetic acid trisodium salt, commercially available as a 50 wt% solution in water from Gelest.
**Phosphonic Silane** ("Pi-Sil") of formula (B) is 3-(Trihydroxysilyl)propyl methylphosphonate sodium salt, commercially available as a 42 wt% solution in water from Gelest.
**Sulfonic Silane/SO₃-Silane** ("SO₃-Sil") of formula (C) is prepared according to the procedure described in the Preparative Example 11 of US 2016/0222223A1 (Jing et al.).
**Zwitterionic Silane/Z-Silane** ("Z-Sil") of formula (D) is prepared according to the procedure described in the Preparative Example 3 of US 2016/0222223A1 (Jing et al.).
**Lithium Silicate** (LiSi) is commercially available under tradename LSS-35 as a 23 wt% solution in water from Nissan.
**Aluminum salt** ("Al") is Aluminum (III) nitrate nonahydrate, commercially available from Acros Organics.

### Preparation of the coating compositions:

The coating compositions are simply prepared by adding the appropriate amount of hydrophilic functional silane(s), and optionally the metal silicate, into deionized water and dissolved by stirring for at least 10 minutes at 20°C using a magnetic stirring bar, so as to achieve the suitable concentration (1wt% or 3wt%). When a multivalent metal salt is used, it is preliminarily dissolved into a mixture of deionized water and NH₃OH (95:5) as a 23wt% solution, and the resulting solution is added to the hydrophilic functional silane solution.

### Coating procedure:

### Substrate cleaning:

Prior to testing the chromium test panels are cleaned by wiping once with isopropyl alcohol using a soaked fluff-free paper tissue (3M professional Panel Wipe 34567) and left to dry at 20°C for 10 minutes, followed by air corona treatment to remove organic contamination of the chromium surface resulting from packaging in protective paper.

### Dip-coating:

The samples are dip-coated using a UniSlide machine available from Velmex Inc., Bloomfield, NY (dipping speed: 300 mm/min, immersion time: 1 minute), followed by oven curing (Heraeus, Germany) at 140°C for 10 minutes. After cooling to room temperature, visible coating residues are removed by one wet wipe (KimWipe wet with deionized water), and then the so-treated sample is used for further testing.

### Examples 1 to 8:

### Fingerprint removal performance of coating compositions comprising various hydrophilic functional silanes.

Example 1 is a comparative example using uncoated chrome surface. The coating compositions of examples 2 to 10 comprise various hydrophilic functional silanes in combination with optional metal silicates and/or multivalent metal salts (hereinafter referred to as hydrophilic reactives). The coating compositions have a weight concentration of either 1wt% or 3wt%. The coating formulations used in experiments 2 to 10 are applied on chrome plated ABS test substrates having various roughness (0.2 µm, 0.5 µm or 0.9 µm, determined by confocal laser microscopy) by dip-coating followed by oven-curing at 140°C for 10 minutes.

The data presented in Table 1 reflect the number of wet wipes to remove the fingerprint (FP). 0x, 200x and 1000x state the number of wet abrasion wipes after which the fingerprint-removal was tested. If complete removal of the fingerprint (assessed by visual inspection) is not achieved after 7 wet wipes, the durability performance test is not passed and the trial is characterized as "x": failed.

**Table 1:**

| Ex. | Hydrophilic Reactives | Ratio / [wt% conc.] | Substrate | FP-removal (immediate) | | | | FP-removal (overnight) | |
|---|---|---|---|---|---|---|---|---|---|
| | | | | 0x | 200x | 500x | 1000x | 0x | 200x |
| 1 | - | - | GM | x | x | x | x | x | x |
| 2 | EDTA-Sil | [1 wt%] | GM | 1 | 1 | 3 | 7 | 2 | x |
| 3 | Z-Sil : Pi-Sil | 90:10 [1 wt%] | SM | 1 | 4 | 5 | 5 | 1 | 3 |
| 4 | Z-Sil: LiSi | 70:30 [3 wt%] | SM | 1 | 4 | 5 | 7 | 2 | 5 |
| 5 | Z-Sil : LiSi | 70:30 [3 wt%] | GM | 1 | 2 | 7 | - | 7 | x |
| 6 | EDTA-Sil: LiSi | 95:5 [1 wt%] | GM | 1 | 2 | 5 | 6 | 4 | x |
| 7 | EDTA-Sil: Al | 70:30 [1 wt%] | GM | 1 | 3 | 7 | 7 | 3 | x |
| 8 | EDTA-Sil: Al | 95:5 [1 wt%] | GM | 1 | 3 | 6 | x | 4 | 5 |
| 9 | Z-Sil : EDTA-Sil: Al | 35:35:30 [1 wt%] | SM | 1 | 4 | 6 | 7 | 3 | 6 |
| 10 | Z-Sil : EDTA-Sil: Al | 35:35:30 [1 wt%] | ZM | 1 | 3 | 5 | 5 | 4 | 5 |

## Claims

1. A method of reducing oily contamination from a chromium surface, which comprises the steps of:
a) providing a chromium surface;
b) applying a protective coating composition comprising:
i. a first hydrophilic functional silane;
ii. optionally, a second hydrophilic functional silane distinct from the first hydrophilic functional silane;
iii. optionally, a multivalent metal salt;
iv. optionally a metal silicate; and
v. a solvent comprising water;
to the chromium surface thereby forming a layer of the protective coating composition adjacent to the chromium surface; and
c) drying and/or curing the layer of the protective coating composition thereby forming a protective coating layer adjacent to the chromium surface;
wherein the first hydrophilic functional silane, and optionally the second hydrophilic functional silane, is selected from the group consisting of zwiterionic silanes, non-zwiterionic silanes, and any combinations thereof; and wherein the zwiterionic silanes and the non-zwiterionic silanes comprise functional groups selected from the group consisting of carboxylate groups, sulfonate groups, quarternary ammonium groups, phosphonate groups, phosphate groups, hydroxyl groups, amine groups, amide groups, and any combinations thereof.

2. A method according to claim 1, wherein the coating composition further comprises a multivalent metal salt, wherein the multivalent metal salt is preferably a cation of a multivalent metal selected from the group consisting of zinc, aluminum, zirconium, chromium, iron, manganese, titanium, calcium, magnesium, and any combinations thereof.

3. A method according to claim 2, wherein the multivalent metal salt comprises a cation of a multivalent metal selected from the group consisting of Zn(II), Al(III), Zr(IV), Cr(III), Fe(II), Ca(II), Mg(II), Cu(II), Ti(IV), Mn(II), Mn(IV), Fe(III), Sn(II), Sn(IV), Ni(II), and any combinations thereof.

4. A method according to claim 2 or 3, wherein the multivalent metal salt is a nitrate salt of a cation of a multivalent metal.

5. A method according to any of claims 2 to 4, wherein the multivalent metal salt is derived from Al(III), and is preferably selected to be Al(NO₃)₃.

6. A method according to any of the preceding claims, wherein the coating composition comprises a first hydrophilic functional silane in an amount comprised between 0.01 wt% and 10 wt%, between 0.03 wt% and 8 wt%, between 0.05 wt% and 6 wt%, between 0.1 wt% and 5 wt%, between 0.3 wt% and 4 wt%, between 0.3 wt% and 3 wt%, between 0.3 wt% and 2.5 wt%, between 0.3 wt% and 2 wt%, between 0.3 wt% and 1.5 wt%, or even between 0.3 wt% and 0.9 wt%, based on the weight of the overall coating composition.

7. A method according to any of the preceding claims, wherein the coating composition comprises a multivalent metal salt in an amount comprised between 0.005 wt% and 5 wt%, between 0.015 wt% and 4 wt%, between 0.025 wt% and 3 wt%, between 0.05 wt% and 2.5 wt%, between 0.15 wt% and 2 wt%, between 0.15 wt% and 1.5 wt%, between 0.15 wt% and 1 wt%, between 0.2 wt% and 1 wt%, between 0.2wt% and 0.8 wt%, between 0.2 wt% and 0.6 wt%, or even between 0.2 wt% and 0.4 wt%, based on the weight of the overall coating composition.

8. A method according to any of the preceding claims, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.

9. A method according to any of the preceding claims, wherein the chromium surface consists essentially of chromium.

10. A method according to any of the preceding claims, wherein the oily contamination takes the form of a fingerprint.

11. A method according to any of claims 1 to 9, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

12. A coated article comprising a chromium surface and a protective coating layer adjacent to the chromium surface, wherein the protective coating layer comprises a layer of the protective coating composition as described in any of claims 1 to 7 which has been dried and/or cured onto the chromium surface, and wherein the coated article has an oily contamination removal performance of less than 7 wet wipes, preferably less than 5 wet wipes, more preferably less than 3 wet wipes, even more preferably less than 2 wet wipes, after 200 wet mechanical abrasion cycles when measured according to the wet mechanical abrasion test method described in the experimental section.

13. A coated article according to claim 12, wherein the protective coating layer has a thickness of less than 1000 nm, less than 800 nm, less than 600 nm, less than 400 nm, less than 200 nm, less than 100 nm, or even less than 50 nm.

14. Use of a protective coating composition as described in any of claims 1 to 7 for reducing oily contamination from a chromium surface.

## Patentansprüche

1. Verfahren zum Reduzieren von öliger Verunreinigung von einer Chromoberfläche, das die folgenden Schritte umfasst:
a) Bereitstellen einer Chromoberfläche;
b) Auftragen einer Schutzbeschichtungszusammensetzung, die Folgendes umfasst:
i. ein erstes hydrophiles funktionelles Silan;
ii. wahlweise ein zweites hydrophiles funktionelles Silan, das von dem ersten hydrophilen funktionellen Silan verschieden ist;
iii. wahlweise ein mehrwertiges Metallsalz;
iv. wahlweise ein Metallsilikat und
v. ein Lösungsmittel, das Wasser umfasst; auf die Chromoberfläche, wodurch eine Schicht der
Schutzbeschichtungszusammensetzung angrenzend an die Chromoberfläche gebildet wird; und
c) Trocknen und/oder Aushärten der Schicht der Schutzbeschichtungszusammensetzung, wodurch eine Schutzbeschichtungsschicht angrenzend an die Chromoberfläche gebildet wird;
wobei das erste hydrophile funktionelle Silan, und wahlweise das zweite hydrophile funktionelle Silan, ausgewählt ist aus der Gruppe, bestehend aus zwitterionischen Silanen, nicht zwitterionischen Silanen und beliebigen Kombinationen davon; und wobei die zwitterionischen Silane und die nicht zwitterionischen Silane funktionelle Gruppen umfassen, die ausgewählt sind aus der Gruppe, bestehend aus Carboxylatgruppen, Sulfonatgruppen, quartären Ammoniumgruppen, Phosphonatgruppen, Phosphatgruppen, Hydroxylgruppen, Amingruppen, Amidgruppen und beliebigen Kombinationen davon.

2. Verfahren nach Anspruch 1, wobei die Beschichtungszusammensetzung ferner ein mehrwertiges Metallsalz umfasst, wobei das mehrwertige Metallsalz vorzugsweise ein Kation eines mehrwertigen Metalls ist, das ausgewählt ist aus der Gruppe, bestehend aus Zink, Aluminium, Zirconium, Chrom, Eisen, Mangan, Titan, Calcium, Magnesium und beliebigen Kombinationen davon.

3. Verfahren nach Anspruch 2, wobei das mehrwertige Metallsalz ein Kation eines mehrwertigen Metalls umfasst, das ausgewählt ist aus der Gruppe, bestehend aus Zn (II), Al (III), Zr (IV), Cr (III), Fe (II), Ca (II), Mg (II), Cu (II), Ti (IV), Mn (II), Mn (IV), Fe (III), Sn (II), Sn (IV), Ni (II) und beliebigen Kombinationen davon.

4. Verfahren nach Anspruch 2 oder 3, wobei das mehrwertige Metallsalz ein Nitratsalz eines Kations eines mehrwertigen Metalls ist.

5. Verfahren nach einem der Ansprüche 2 bis 4, wobei das mehrwertige Metallsalz von Al (III) abgeleitet ist und vorzugsweise als Al(NO₃)₃ ausgewählt ist.

6. Verfahren nach einem der vorstehenden Ansprüche, wobei die Beschichtungszusammensetzung ein erstes hydrophiles funktionelles Silan in einer Menge zwischen 0,01 Gew.-% und 10 Gew.-%, zwischen 0,03 Gew.-% und 8 Gew.-%, zwischen 0,05 Gew.-% und 6 Gew.-%, zwischen 0,1 Gew.-% und 5 Gew.-%, zwischen 0,3 Gew.-% und 4 Gew.-%, zwischen 0,3 Gew.-% und 3 Gew.-%, zwischen 0,3 Gew.-% und 2,5 Gew.-%, zwischen 0,3 Gew.-% und 2 Gew.-%, zwischen 0,3 Gew.-% und 1,5 Gew.-% oder sogar zwischen 0,3 Gew.-% und 0,9 Gew.-%, bezogen auf das Gewicht der gesamten Beschichtungszusammensetzung, umfasst.

7. Verfahren nach einem der vorstehenden Ansprüche, wobei die Beschichtungszusammensetzung ein mehrwertiges Metallsalz in einer Menge zwischen 0,005 Gew.-% und 5 Gew.-%, zwischen 0,015 Gew.-% und 4 Gew.-%, zwischen 0,025 Gew.-% und 3 Gew.-%, zwischen 0,05 Gew.-% und 2,5 Gew.-%, zwischen 0,15 Gew.-% und 2 Gew.-%, zwischen 0,15 Gew.-% und 1,5 Gew.-%, zwischen 0,15 Gew.-% und 1 Gew.-%, zwischen 0,2 Gew.-% und 1 Gew.-%, zwischen 0,2 Gew.-% und 0,8 Gew.-%, zwischen 0,2 Gew.-% und 0,6 Gew.-% oder sogar zwischen 0,2 Gew.-% und 0,4 Gew.-%, bezogen auf das Gewicht der gesamten Beschichtungszusammensetzung, umfasst.

8. Verfahren nach einem der vorstehenden Ansprüche, wobei die Chromoberfläche eine metallische Oberfläche ist, die einen Chromgehalt von mindestens 50 Gew.-%, mindestens 70 Gew.-%, mindestens 80 Gew.-%, mindestens 90 Gew.-%, mindestens 95 Gew.-% oder sogar mindestens 98 Gew.-%, bezogen auf das Gewicht der metallischen Oberfläche, aufweist.

9. Verfahren nach einem der vorstehenden Ansprüche, wobei die Chromoberfläche im Wesentlichen aus Chrom besteht.

10. Verfahren nach einem der vorstehenden Ansprüche, wobei die ölige Verunreinigung die Form eines Fingerabdrucks aufweist.

11. Verfahren nach einem der Ansprüche 1 bis 9, wobei die ölige Verunreinigung die Form eines Flecks annimmt, der aus öligen Fettkomponenten stammt, die ausgewählt sind aus der Gruppe, bestehend aus Feuchtigkeitscremes, Körperschutzcremes, Sonnencremes, Gesichtscremes, therapeutischen Cremes, menschlichem Körperfett, Speisefett, essbarem Öl, Speiseöl und beliebigen Kombinationen oder Gemischen davon.

12. Beschichteter Gegenstand, der eine Chromoberfläche und eine an die Chromoberfläche angrenzende Schutzbeschichtungsschicht umfasst, wobei die Schutzbeschichtungsschicht eine Schicht der Schutzbeschichtungszusammensetzung, wie in einem der Ansprüche 1 bis 7 beschrieben, umfasst, die auf der Chromoberfläche getrocknet und/oder ausgehärtet worden ist, und wobei der beschichtete Gegenstand eine Abtragsleistung von öliger Verunreinigung von weniger als 7 Feuchttüchern, vorzugsweise weniger als 5 Feuchttüchern, mehr bevorzugt weniger als 3 Feuchttüchern, noch mehr bevorzugt weniger als 2 Feuchttüchern nach 200 mechanischen Nassabriebzyklen aufweist, gemessen nach dem mechanischen Nassabrieb-Testverfahren, das im experimentellen Abschnitt beschrieben ist.

13. Beschichteter Gegenstand nach Anspruch 12, wobei die Schutzbeschichtungsschicht eine Dicke von weniger als 1000 nm, weniger als 800 nm, weniger als 600 nm, weniger als 400 nm, weniger als 200 nm, weniger als 100 nm oder sogar weniger als 50 nm aufweist.

14. Verwendung einer Schutzbeschichtungszusammensetzung, wie in einem der Ansprüche 1 bis 7 beschrieben, zum Verringern öliger Verunreinigung von einer Chromoberfläche.

## Revendications

1. Procédé de réduction de contamination huileuse d'une surface de chrome, qui comprend les étapes consistant à :
a) fournir une surface de chrome ;
b) appliquer une composition de revêtement protecteur comprenant :
i. un premier silane fonctionnel hydrophile ;
ii. éventuellement, un deuxième silane fonctionnel hydrophile distinct du premier silane fonctionnel hydrophile ;
iii. éventuellement, un sel métallique multivalent ;
iv. éventuellement un silicate de métal ; et
v. un solvant comprenant de l'eau ;
à la surface de chrome en formant de ce fait une couche de la composition de revêtement protecteur adjacente à la surface de chrome ; et
c) sécher et/ou durcir la couche de la composition de revêtement protecteur en formant de ce fait une couche de revêtement protecteur adjacente à la surface de chrome ;
dans lequel le premier silane fonctionnel hydrophile, et éventuellement le deuxième silane fonctionnel hydrophile, est choisi dans le groupe constitué de silanes zwittérioniques, silanes non zwittérioniques, et n'importe quelle combinaison de ceux-ci ; et dans lequel les silanes zwittérioniques et les silanes non zwittérioniques comprennent des groupes fonctionnels choisis dans le groupe constitué de groupes carboxylate, groupes sulfonate, groupes ammonium quaternaire, groupes phosphonate, groupes phosphate, groupes hydroxyle, groupes amine, groupes amide, et n'importe quelle combinaison de ceux-ci.

2. Procédé selon la revendication 1, dans lequel la composition de revêtement comprend en outre un sel métallique multivalent, dans lequel le sel métallique multivalent est de préférence un cation d'un métal multivalent choisi dans le groupe constitué de zinc, aluminium, zirconium, chrome, fer, manganèse, titane, calcium, magnésium, et n'importe quelle combinaison de ceux-ci.

3. Procédé selon la revendication 2, dans lequel le sel métallique multivalent comprend un cation d'un métal multivalent choisi dans le groupe constitué de Zn(II), Al(III), Zr(IV), Cr(III), Fe(II), Ca(II), Mg(II), Cu(II), Ti(IV), Mn(II), Mn(IV), Fe(III), Sn(II), Sn(IV), Ni(II), et n'importe quelle combinaison de ceux-ci.

4. Procédé selon la revendication 2 ou 3, dans lequel le sel métallique multivalent est un sel nitrate d'un cation d'un métal multivalent.

5. Procédé selon l'une quelconque des revendications 2 à 4, dans lequel le sel métallique multivalent est dérivé d'Al(III), et est de préférence choisi pour être Al(NO₃)₃.

6. Procédé selon l'une quelconque des revendications précédentes, dans lequel la composition de revêtement comprend un premier silane fonctionnel hydrophile en une quantité comprise entre 0,01 % en poids et 10 % en poids, entre 0,03 % en poids et 8 % en poids, entre 0,05 % en poids et 6 % en poids, entre 0,1 % en poids et 5 % en poids, entre 0,3 % en poids et 4 % en poids, entre 0,3 % en poids et 3 % en poids, entre 0,3 % en poids et 2,5 % en poids, entre 0,3 % en poids et 2 % en poids, entre 0,3 % en poids et 1,5 % en poids, ou même entre 0,3 % en poids et 0,9 % en poids, sur la base du poids de la composition de revêtement globale.

7. Procédé selon l'une quelconque des revendications précédentes, dans lequel la composition de revêtement comprend un sel métallique multivalent en une quantité comprise entre 0,005 % en poids et 5 % en poids, entre 0,015 % en poids et 4 % en poids, entre 0,025 % en poids et 3 % en poids, entre 0,05 % en poids et 2,5 % en poids, entre 0,15 % en poids et 2 % en poids, entre 0,15 % en poids et 1,5 % en poids, entre 0,15 % en poids et 1 % en poids, entre 0,2 % en poids et 1 % en poids, entre 0,2 % en poids et 0,8 % en poids, entre 0,2 % en poids et 0,6 % en poids, ou même entre 0,2 % en poids et 0,4 % en poids, sur la base du poids de la composition de revêtement globale.

8. Procédé selon l'une quelconque des revendications précédentes, dans lequel la surface de chrome est une surface métallique ayant une teneur en chrome d'au moins 50 % en poids, au moins 70 % en poids, au moins 80 % en poids, au moins 90 % en poids, au moins 95 % en poids, ou même au moins 98 % en poids, sur la base du poids de la surface métallique.

9. Procédé selon l'une quelconque des revendications précédentes, dans lequel la surface de chrome est essentiellement constituée de chrome.

10. Procédé selon l'une quelconque des revendications précédentes, dans lequel la contamination huileuse prend la forme d'une empreinte digitale.

11. Procédé selon l'une quelconque des revendications 1 à 9, dans lequel la contamination huileuse prend la forme d'une tache provenant de composants huileux et gras choisis dans un groupe constitué de crèmes hydratantes, crèmes de protection corporelle, crèmes solaires, crèmes pour le visage, crèmes thérapeutiques, graisse du corps humain, graisse comestible, huile comestible, huile alimentaire, et n'importe quelles combinaisons ou n'importe quels mélanges de celles-ci.

12. Article revêtu comprenant une surface de chrome et une couche de revêtement protecteur adjacente à la surface de chrome, dans lequel la couche de revêtement protecteur comprend une couche de la composition de revêtement protecteur telle que décrite dans l'une quelconque des revendications 1 à 7 qui a été séchée et/ou durcie sur la surface de chrome, et dans lequel l'article revêtu a une performance d'élimination de contamination huileuse inférieure à 7 lingettes humides, de préférence inférieure à 5 lingettes humides, plus préférablement inférieure à 3 lingettes humides, encore plus préférablement inférieure à 2 lingettes humides, après 200 cycles d'abrasion mécanique humide lorsqu'on mesure selon le procédé de test d'abrasion mécanique humide décrit dans la section expérimentale.

13. Article revêtu selon la revendication 12, dans lequel la couche de revêtement protecteur a une épaisseur inférieure à 1000 nm, inférieure à 800 nm, inférieure à 600 nm, inférieure à 400 nm, inférieure à 200 nm, inférieure à 100 nm, ou même inférieure à 50 nm.

14. Utilisation d'une composition de revêtement protecteur telle que décrite dans l'une quelconque des revendications 1 à 7 pour réduire une contamination huileuse d'une surface de chrome.
